# EUROPÄISCHE PATENTSCHRIFT

(11) **EP 3 204 255 B1**
(45) Veröffentlichungstag und Bekanntmachung des Hinweises auf die Patenterteilung: **02.01.2019**
(21) Anmeldenummer: 15780809.8
(22) Anmeldetag: 08.10.2015
(51) Int. Cl.: B60K 37/06, H04L 29/08

(54) **FAHRZEUGMULTIMEDIAEINRICHTUNG**
VEHICLE MULTIMEDIA DEVICE
DISPOSITIF MULTIMÉDIA POUR VÉHICULE

(30) Priorität: 09.10.2014 DE 102014220535
(43) Veröffentlichungstag der Anmeldung: 16.08.2017
(73) Patentinhaber: Continental Automotive GmbH, 30165 Hannover (DE)
(72) Erfinder: BIEGER, Stefan, 63667 Nidda (DE); DOCHOW, Gerhard, 35580 Wetzlar (DE)
(86) Internationale Anmeldenummer: PCT/EP2015/073265
(87) Internationale Veröffentlichungsnummer: WO 2016/055571

(56) Entgegenhaltungen:
- WO-A1-2012/156029

## Beschreibung

Die Erfindung betrifft die Ausgabe von Multimediadaten von einer an eine Fahrzeugmultimediaeinrichtung gekoppelten Rechnereinrichtung mittels der Fahrzeugmultimediaeinrichtung. Insbesondere betrifft die Erfindung eine Fahrzeugmultimediaeinrichtung, ein Fahrzeugmultimediasystem, ein Verfahren, ein Programmelement, ein computerlesbares Medium und ein tragbares Endgerät.
Moderne Kraftfahrzeuge, insbesondere Personenkraftwagen, können mit Fahrzeugmultimediaeinrichtungen ausgestattet sein, die unterschiedliche Arten von Multimediadaten ausgeben können. Beispielsweise können solche Fahrzeugmultimediaeinrichtungen Funktionen eines Autoradios, eines Navigationsgerätes, eines CD-Spielers, eines Internetbrowsers und andere Funktionen übernehmen. Typischerweise wird eine solche Fahrzeugmultimediaeinrichtung über eine sogenannte Head Unit gesteuert, die in einer Mittelkonsole des Fahrzeuges integriert sein kann.
Ferner besteht die Möglichkeit, dass eine Recheneinheit, zum Beispiel ein tragbares Endgerät, an die Fahrzeugmultimediaeinrichtung gekoppelt wird. In diesem Fall können Multimediadaten von der an die Fahrzeugmultimediaeinrichtung gekoppelten Recheneinheit mittels der Fahrzeugmultimediaeinrichtung ausgegeben werden. Beispielsweise kann ein Bildschirminhalt eines an die Fahrzeugmultimediaeinrichtung gekoppelten Smartphones auf der Head Unit der Fahrzeugmultimediaeinrichtung wiedergegeben bzw. angezeigt werden.

Aus der WO 2012/156029A ist der Oberbegriff des Anspruchs 1 bekannt.

Es ist eine Aufgabe der Erfindung die Sicherheit im Straßenverkehr zu erhöhen.

Diese Aufgabe wird durch die Gegenstände der unabhängigen bzw. nebengeordneten Ansprüche gelöst. Weiterbildungen und Ausführungsformen sind den abhängigen Ansprüchen, der nachfolgenden Beschreibung sowie den Figuren zu entnehmen.

Ein erster Aspekt der Erfindung betrifft eine Fahrzeugmultimediaeinrichtung, die eine Ausgabeeinrichtung zum Ausgeben von Multimediadaten sowie eine Steuereinrichtung zum Steuern der Ausgabeeinrichtung aufweist. Ferner ist die Steuereinrichtung dazu ausgeführt, eine Fahrzeugstatusinformation zu bestimmen und die Fahrzeugstatusinformation an eine an die Fahrzeugmultimediaeinrichtung gekoppelte Rechnereinrichtung zu übertragen. Die Steuereinrichtung ist ferner dazu ausgeführt, auszugebende Multimediadaten und Freigabedaten, die festlegen, in welchem Umfang die auszugebenden Multimediadaten auszugeben sind, von der Rechnereinrichtung zu empfangen. Außerdem ist die Steuereinrichtung dazu ausgeführt, die auszugebenden Multimediadaten maximal in dem von den Freigabedaten festgelegten Umfang mittels der Ausgabeeinrichtung auszugeben.

Unter Fahrzeugmultimediaeinrichtung kann im Kontext der Erfindung auch ein sogenanntes Infotainmentsystem verstanden werden. Die Ausgabeeinrichtung kann beispielsweise einen Bildschirm und/oder einen Lautsprecher aufweisen. Beispielsweise kann der Bildschirm in einer sogenannten Head Unit der Fahrzeugmultimediaeinrichtung, die in einer Mittelkonsole des Fahrzeuges integriert sein kann, installiert sein. Beispielsweise kann es sich beim Bildschirm der Ausgabeeinrichtung um einen Touch-Bildschirm handeln, durch den der Benutzer Eingabe tätigen kann. Die Multimediadaten können beispielsweise ein oder mehrere auszugebende Bilder und/oder einen oder mehrere auszugebende Töne definieren. Die Steuereinrichtung kann beispielsweise einen Prozessor der Fahrzeugmultimediaeinrichtung bezeichnen und kann ferner dazu ausgeführt sein, die Fahrzeugmultimediaeinrichtung zu steuern. Beispielsweise kann die Steuereinrichtung als Einchipsystem (SoC) realisiert sein.

Die Fahrzeugstatusinformation kann beispielsweise mittels der Fahrzeugsensorik ermittelt werden und an die Steuereinrichtung übertragen werden. Ferner kann die Fahrzeugstatusinformation auch über Car-to-Car-Kommunikation (C2C) und/oder über Car-to-Infrastructure-Kommunikation (C2I) ermittelt werden. Die Fahrzeugstatusinformation kann eine Information darüber enthalten, welche Aufmerksamkeit der Fahrer dem Verkehr zu widmen hat. Beispielsweise muss der Fahrer bei höherer Verkehrsdichte mehr Aufmerksamkeit dem Verkehr widmen.

Die Rechnereinrichtung kann beispielsweise ein tragbares Endgerät bzw. ein mobiles Gerät sein. Beispielsweise kann die Rechnereinrichtung ein Smartphone, ein Tablet, ein Fernseher, ein MP3-Player oder ein tragbarer Computer sein. Ferner kann die Rechnereinrichtung mit der Fahrzeugmultimediaeinrichtung gekoppelt werden. Darunter kann verstanden werden, dass die Fahrzeugmultimediaeinrichtung und die Rechnereinrichtung zum Datenaustausch miteinander verbunden werden können. Beispielsweise können die Rechnereinrichtung und die Fahrzeugmultimediaeinrichtung zum Bereitstellen einer bidirektionalen Kommunikation miteinander gekoppelt werden. Die Koppelung zwischen Rechnereinrichtung und dem Fahrzeugmultimediasystem kann via Kabel und/oder via Funk bereitgestellt werden. Beispielsweise können die Fahrzeugmultimediaeinrichtung und die Rechnereinrichtung via USB, Bluetooth, WLAN, HDMI, MHL (Mobile High-Definition Link), MirrorLink, MiraCast oder einer anderen Verbindung miteinander gekoppelt sein.

Die auszugebenden Multimediadaten, welche die Steuereinrichtung empfangen kann, können von der Rechnereinrichtung erzeugt werden. Beispielsweise handelt es sich bei den auszugebenden Multimediadaten um Multimediadaten, die ein Bild definieren, das auf der Rechnereinrichtung ausgegeben wird und gleichzeitig auf der Ausgabeeinrichtung der Fahrzeugmultimediaeinrichtung ausgegeben werden soll. Zum Beispiel können die Multimediadaten ein Bild einer Benutzerschnittstelle einer aktiven Applikation der Rechnereinheit definieren.

Die Freigabedaten können zusammen mit den auszugebenden Multimediadaten und/oder mittels derselben Datenverbindung an die Fahrzeugmultimediaeinrichtung übertragen und von der Steuereinrichtung empfangen werden. Ferner können die Freigabedaten auch unabhängig von den auszugebenden Multimediadaten übertragen und empfangen bzw. mittels unterschiedlicher Datenverbindungen übertragen und empfangen werden. Beispielsweise können zwei unterschiedliche Verbindungen zwischen der Rechnereinrichtung und der Fahrzeugmultimediaeinrichtung existieren, so dass mittels der einen Verbindung die auszugebenden Multimediadaten und mittels der anderen Verbindung die Freigabedaten übertragen werden können.

Der Umfang, in welchem die auszugebenden Multimediadaten auszugeben sind, kann beispielsweise definieren, ob die auszugebenden Multimediadaten überhaupt ausgegeben werden dürfen. Ferner kann der Umfang auch eine Aktualisierungsrate bzw. eine maximale Aktualisierungsrate definieren, mit welcher die Ausgabe der Multimediadaten durch die Ausgabeeinrichtung aktualisiert werden darf. Beispielsweise handelt es sich dabei um eine Aktualisierungsrate eines Bildes, das durch die Ausgabeeinrichtung ausgegeben wird. Ferner kann der Umfang auch festlegen, dass die Multimediadaten, die ein auszugebendes Bild definieren, farblich abgeschwächt werden. Außerdem kann der Umfang auch festlegen, dass die Multimediadaten, die auszugebende Töne definieren, eine bestimmte Lautstärke nicht überschreiten dürfen. Der Umfang kann auch die Interaktionsmöglichkeiten des Benutzers mit einem auf einem Bildschirm des Ausgabeeinrichtung angezeigten Bild definieren. Beispielsweise können Schaltflächen ab einer gewissen Geschwindigkeit deaktiviert sein.

Die Rechnereinrichtung kann ferner dazu ausgeführt sein, die auszugebenden Multimediadaten zu erzeugen. Beispielsweise definieren die Multimediadaten unter anderem ein Bild, das auf dem Bildschirm der Rechnereinrichtung dargestellt wird. Außerdem kann die Steuereinrichtung dazu ausgeführt sein, basierend auf der Fahrzeugstatusinformation die Freigabedaten zu erzeugen. Beispielsweise können die Freigabedaten in Abhängigkeit der Fahrzeugstatusinformation erzeugt werden. Beispielsweise können die Freigabedaten definieren, dass gewisse Applikationen ab einer gewissen Geschwindigkeit des Fahrzeuges nicht mehr oder nur beschränkt auf einem Bildschirm der Ausgabeeinrichtung dargestellt werden. Darunter kann im Kontext der Erfindung verstanden werden, dass ein Bild einer Benutzerschnittstelle einer Applikation, die auf der Rechnereinrichtung aktiv ist, nicht mehr oder nur beschränkt dargestellt werden.

Mit anderen Worten kann die Erfindung ein Fahrzeugmultimediasystem bzw. ein Infotainmentsystem betreffen, bei welchem auszugebende Inhalte eines an die Fahrzeugmultimediaeinrichtung gekoppelten Gerätes bzw. einer gekoppelten Rechnereinrichtung abhängig von dem aktuellen Fahrzeugzustand, der vom Fahrzeug erfassten Umgebung und dem Fahrziel ausgegeben werden können. Beispielsweise können bei parkenden Fahrzeugen alle Inhalte und Applikationen des an die Fahrzeugmultimediaeinrichtung gekoppelten Geräts verfügbar gemacht werden. Bei einer gewissen Fahrgeschwindigkeit können dann bestimmte Inhalte nicht mehr verfügbar sein. Ferner können auch situationsabhängig bestimmte Inhalte vorgeschlagen werden, die für den Fahrer dann schnell abrufbar sind.

Dies kann beispielsweise mittels einer bidirektionalen Kommunikation zwischen einer Head Unit (HU) der Fahrzeugmultimediaeinrichtung und dem tragbaren Endgerät realisiert werden. Die Head Unit (HU) kann dabei einen Fahrzeugstatus (FZGS), zum Beispiel eine Geschwindigkeit, einen Tankinhalt oder eine andere Statusinformation, an das an die Head Unit gekoppelte tragbare Endgerät (PD) übertragen. Das tragbare Endgerät (PD) kann eine Information, ob die übertragenen Bildinhalte auf der Head Unit dargestellt werden dürfen und eine manuelle Fernbedienung oder Audioausgabe des portablen Endgeräts erfolgen darf, also eine Freigabenachricht (FMSG), an die Head Unit (HU) übertragen. Alternativ kann statt des Sperrens der Bildschirmausgabe auch eine Freigabe für eine lediglich farblich abgeschwächte bzw. ausgegraute Darstellung erfolgen, die weniger ablenkt oder die Änderungsrate der Bildschirmausgabe, zum Beispiel einmal in 5 Sekunden, bzw. die maximale Lautstärke der Audioausgabe beschränkt werden.

Auf diese Weise wird eine an die aktuelle Fahrsituation angepasste Integration von tragbaren Endgeräten ins Fahrzeug ermöglicht. Die auf dem Fahrzeugstatus basierenden Freigabesignale erlauben eine feine abgestufte Auswahl an Freigaben und Beschränkungen für die Nutzung von Applikationen auf einem tragbaren Endgerät durch den Fahrer.

Mit anderen Worten kann ein Kerngedanke der Erfindung darin gesehen werden, dass eine Übertragung von Multimediadaten von einer Rechnereinrichtung zu einer Fahrzeugmultimediaeinrichtung bereitgestellt wird, so dass die Multimediadaten in Abhängigkeit des Fahrzeugstatus ausgegeben werden können. Hierfür kann die Fahrzeugmultimediaeinrichtung dazu ausgeführt sein, eine Fahrzeugstatusinformation zu bestimmen und diese an die Rechnereinrichtung zu übertragen. Die Rechnereinrichtung kann basierend auf dieser empfangenen Fahrzeugstatusinformation entsprechende Freigabedaten erzeugen, die den Umfang der Ausgabe der Multimediadaten durch die Fahrzeugmultimediaeinrichtung definieren.

Auf diese Weise können die Multimediadaten der gekoppelten Rechnereinrichtung derart ausgegeben werden, dass sie den Fahrer in Abhängigkeit der momentanen Fahrsituation nicht zu stark ablenken, so dass insgesamt die Sicherheit im Straßenverkehr erhöht werden kann.

Gemäß einem Ausführungsbeispiel der Erfindung ist die Ausgabeeinrichtung ein Bildschirm. Ferner definieren die von der an die Fahrzeugmultimediaeinrichtung gekoppelten Rechnereinrichtung gesendeten Multimediadaten ein auf dem Bildschirm wiederzugebendes Bild.

Darunter kann auch verstanden werden, dass die Multimediadaten Videodaten enthalten. Beispielsweise kann die Rechnereinheit über einen Mechanismus wie MHL (Mobile High Definition Link), MirrorLink und MiraCast miteinander verbunden werden. Über solche Mechanismen lassen sich tragbare Endgeräte und andere Geräte an eine Fahrzeugmultimediaeinrichtung ankoppeln, so dass der Bildschirminhalt des angekoppelten Gerätes an die Fahrzeugmultimediaeinrichtung übertragen werden kann und dort angezeigt werden kann. Dies schließt jedoch nicht aus, dass zusätzlich auch Audiodaten übertragen und ausgegeben werden können. Beispielsweise können die Multimediadaten ein Bild einer Benutzerschnittstelle einer aktiven Applikation der Rechnereinheit definieren. Auf diese Weise können Bilder und/oder Videos von der Rechnereinheit auf einem Bildschirm der Fahrzeugmultimediaeinrichtung derart dargestellt werden, dass der Fahrer nicht allzu sehr vom Verkehr abgelenkt wird.

Gemäß einer beispielhaften Ausführungsform der Erfindung ist die Steuereinrichtung dazu ausgeführt, nach Empfang der Freigabedaten die auszugebenden Multimediadaten maximal in dem von den Freigabedaten festgelegten Umfang mittels der Ausgabeeinrichtung für einen vordefinierten Zeitraum auszugeben. Ferner ist die Steuereinrichtung dazu ausgeführt, die auszugebenden Multimediadaten nach Ablauf des vordefinierten Zeitraums nicht mehr auszugeben, wenn zwischen dem Empfangen der Freigabedaten und dem Ablauf des vordefinierten Zeitraums keine neuen Freigabedaten empfangen wurden.

Mit anderen Worten können die Freigabedaten zyklisch an die Fahrzeugmultimediaeinrichtung übertragen werden und/oder von der Steuereinrichtung der Fahrzeugmultimediaeinrichtung empfangen werden. Im Falle, dass die Steuereinrichtung die Freigabedaten für einen gewissen Zeitraum bzw. für den vordefinierten Zeitraum nicht empfängt, so kann die Ausgabe der Multimediadaten gestoppt oder beschränkt werden.

Der vordefinierte Zeitraum kann beispielsweise im Bereich zwischen 1 und 5 Sekunden liegen. Der vordefinierte Zeitraum kann ausreichend groß definiert sein, so dass es nicht zu einer signifikanten Mehrbelastung der Datenverbindung zwischen der Steuereinrichtung und der Rechnereinrichtung kommt. Ferner kann der vordefinierte Zeitraum auch ausreichend kurz definiert sein, so dass es im Falle einer Fehlfunktion oder Manipulation der Rechnereinrichtung nicht zu einer längeren Ablenkung des Fahrers kommt.

Auf diese Weise kann der Umfang der Ausgabe der Multimediadaten dynamisch an die Fahrsituation angepasst werden.

Gemäß einer weiteren beispielhaften Ausführungsform der Erfindung ist die Steuereinrichtung dazu ausgeführt, verschlüsselte und/oder signierte Freigabedaten von der gekoppelten Rechnereinrichtung zu empfangen. Ferner ist die Steuereinrichtung dazu ausgeführt, die Freigebedaten zu entschlüsseln bzw. eine Signatur der Freigabedaten zu prüfen und die Multimediadaten nur dann auszugeben, wenn die Freigabedaten erfolgreich entschlüsselt wurden bzw. wenn deren Signatur erfolgreich geprüft wurde.

Auf diese Weise können Manipulationen der Freigabedaten verhindert werden.

Gemäß einer weiteren beispielhaften Ausführungsform der Erfindung ist die Fahrzeugstatusinformation ausgewählt aus der Gruppe bestehend aus einer Geschwindigkeit des Fahrzeuges, einem Tankinhalt des Fahrzeuges, einer Verkehrsdichte in der Fahrzeugumgebung, einer Information zu Lichtverhältnissen, einer Komplexität eines vorausliegenden Fahrzeugpfades, einer Anzahl von Abbiegungen in einem vorausliegenden Fahrzeugpfad, vom Fahrzeug zu berücksichtigende Verkehrsregeln, und jede Kombination hiervon.

Aus diesen Informationen kann die Steuereinrichtung eine Information darüber gewinnen, welche Aufmerksamkeit vom Fahrer für die derzeitige Fahrsituation gefordert wird. Ferner kann es sich bei den genannten Informationen um momentane Informationen handeln. Diese Informationen können beispielsweise durch Fahrzeugsensoren, mittels Car-2-Car-Kommunikation (C2C) und/oder mittels Car-to-Infrastructure-Kommunikation (C2I) ermittelt werden.

Ein weiterer Aspekt der Erfindung betrifft ein Fahrzeugmultimediasystem, welches eine im Kontext der vorliegenden Erfindung beschriebene Fahrzeugmultimediaeinrichtung und eine Rechnereinrichtung aufweist. Ferner sind die Fahrzeugmultimediaeinrichtung und die Rechnereinrichtung miteinander koppelbar. Außerdem ist die Rechnereinrichtung dazu ausgeführt, die Fahrzeugstatusinformation der Fahrzeugmultimediaeinrichtung zu empfangen. Die Rechnereinrichtung ist ferner dazu ausgeführt, die auszugebenden Multimediadaten zu erzeugen und basierend auf der Fahrzeugstatusinformation die Freigabedaten zu erzeugen. Die Rechnereinrichtung ist außerdem dazu ausgeführt, die auszugebenden Multimediadaten und die Fahrzeugstatusinformation an die Fahrzeugmultimediaeinrichtung zu übertragen.

Gemäß einer beispielhaften Ausführungsform der Erfindung weist die Rechnereinrichtung eine Speichereinheit auf, wobei in der Speichereinheit ein Regelsatz gespeichert ist, in welchem für unterschiedliche Fahrzeugstatusinformationen und für unterschiedliche Arten von Multimediadaten definiert ist, in welchem Umfang die unterschiedlichen Arten von Multimediadaten jeweils in Abhängigkeit von einer Fahrzeugstatusinformation auszugeben sind.

Verschiedene Arten von Multimediadaten können beispielsweise Audiodaten, Bilddaten, Videodaten und/oder Applikationsdaten sein. Die Applikationsdaten können beispielsweise Daten einer auf der Rechnereinheit ausgeführten Applikation aufweisen. Beispielsweise können diese Daten ein Bild einer Benutzerschnittstelle definieren. Im Regelsatz kann beispielsweise definiert sein, ob eine Applikation bei einer bestimmten Fahrzeugstatusinformation ausgegeben werden darf oder nicht. Ferner kann auch definiert sein, ob eine bestimmte Funktion einer Applikation und/oder ein Applikationsbestandteil bei einer bestimmten Fahrzeugstatusinformation ausgegeben werden darf oder nicht.

Beispielsweise kann der Regelsatz in Form einer Freigabetabelle in der Speichereinheit gespeichert sein. Mit anderen Worten kann im Regelsatz definiert sein, wie eine bestimmte Art von Multimediadaten in Abhängigkeit von einer Fahrzeugstatusinformation auszugeben ist. Beispielsweise kann jeweils eine auf der Rechnereinheit ausgeführte Applikation eine eigene Art von Multimediadaten erzeugen, die mittels der Ausgabeeinrichtung der Fahrzeugmultimediaeinrichtung auszugeben sind.

Dieser Regelsatz kann beispielsweise in Form einer Applikation in der Rechnereinheit gespeichert sein. Ferner kann der Regelsatz aktualisierbar oder unter Umständen editierbar sein.

Mit anderen Worten können Regeln für die Freigaben in einer Freigabetabelle (FRULS) festgelegt werden, die für jede bekannte Applikation (Ai) eine Signatur enthält, mit der eindeutig festgestellt werden kann, um welches Anwendungsprogramm es sich handelt oder ob es sich um eine unbekannte Applikation handelt. Den Applikationen A1 bis An können die Freigabedaten für visuelle und akustische Ausgaben und die Bedienmöglichkeiten in Abhängigkeit vom Fahrzeugstatus (FZGS), zum Beispiel der Geschwindigkeit, der aktuellen Verkehrsdichte, der Verkehrswegkomplexität in der Umgebung des Fahrzeuges, den Fahrbahneigenschaften (abgeleitet aus Außentemperatur, ABS, ASR, usw.) und/oder der aktuellen geografischen Position, jeweils zugeordnet werden. Ferner kann die Freigabetabelle (FRULS) bzw. der in der Speichereinheit gespeicherte Regelsatz aktualisierbar sein und gegen Manipulationen mittels Verschlüsselung geschützt sein. Damit keine nicht autorisierte Freigabetabelle bzw. kein nicht autorisierter Regelsatz erzeugt werden kann, kann die Freigabetabelle bzw. der Regelsatz von einem autorisierten Dienst (SIG_OEM) signiert werden, der in einer Softwarekomponente der Rechnereinrichtung (PD_CLT) mithilfe von den öffentlichen Signaturen des autorisierten Dienstes (SIG_OEM) überprüft wird.

Die Autorisierung kann auch automatisch über eine Datenkommunikationsstelle mit einem Rechner eines Autorisierungsdienstes erfolgen, insbesondere auch über eine Mobilfunkdatenschnittstelle der Rechnereinheit bzw. des tragbaren Endgerätes mit einem im Internet erreichbaren Server des Autorisierungsdienstes. Ferner kann über diese geschützte (d. h. authentifizierte, autorisierte und/oder verschlüsselte) Verbindung eine neue Version des Regelsatzes zum portablen Endgerät übertragen werden, der den vorhandenen Regelsatz ändert oder erweitert. Dies kann sich sowohl auf die Freigabetabelle (FRULS) als auch auf die im Folgenden definierte Regelbasis (APRULS) für Freigaben von Applikationen und Behandlung von Fahrzeugereignissen beziehen.

Ferner kann die Freigabetabelle bzw. der in der Speichereinheit gespeicherte Regelsatz auch vom Endbenutzer über das User Interface des tragbaren Endgeräts bzw. der Rechnereinheit oder der Head Unit festgelegt werden. Dazu können dem Endbenutzer vom User Interface zunächst die gesetzlichen Hinweise mitgeteilt werden, nach denen eine Benutzung einer Applikation während der Fahrt verboten ist oder nicht erfolgen darf bzw. sollte. Dann kann der Endbenutzer die Applikationen des tragbaren Endgerätes auswählen, die er auf der Head Unit benutzen möchte. Diesen kann er über das Benutzerinterface die Ereignisse zuweisen, wann eine Freigabe für eine Applikation entzogen oder erteilt werden soll. Diese Freigaberegeln können dann permanent in der Freigabetabelle (FRULS) bzw. dem Regelsatz abgespeichert werden.

Als Erweiterung kann eine Sammlung von Regelsätzen (FRULSi) in dem Endgerät gespeichert sein, in denen jeweils einzelnen Regionen zugeordnet sind, zwischen denen je nach den lokalen gesetzlichen Vorgaben automatisch umgeschaltet werden kann. Dazu kann eine Softwarekomponente (PD_CLT) des tragbaren Endgeräts aus der geografischen Position und einer Kartenbasis (MAP) die für die Rechtsnorm bestimmende Region berechnen, zum Beispiel das momentane Bundesland, oder diese direkt von der Head Unit Softwarekomponente (HU_SVR) beziehen und den jeweils dafür passenden Regelsatz (FRULS) aus der Sammlung von Regelsätzen (FRULSi) auswählen und den Benutzer über die erfolgte Umschaltung des Regelsatzes informieren, zum Beispiel durch eine Display- oder Sprachausgabe. Falls eine Region nicht zweifelsfrei ermittelt werden kann, kann auf einen voreingestellten Regelsatz zurückgegriffen werden, der die Freigaben so restriktiv erteilt, dass sie den Rechtsnormen in allen in Frage kommenden Ländern entsprechen.

Dem Benutzer könnte die Smartphone-Komponente (PD_CLT) auch eine Übersicht der Applikationen anzeigen, die in der aktuellen Situation alle oder bestimmte Freigaben besitzen. Dabei könnten die Applikationen hervorgehoben oder in die Darstellung für bevorzugte Applikationen gebracht werden, die in der aktuellen Situation hilfreich wären. Beispielsweise können dies bei fast leerem Tank eine Tankstellen-App oder, wenn die Navigation der Head Unit eine Route zum Flughafen plant, eine Applikation zur Darstellung der Abflug- oder Ankunftszeiten sein. Zur Realisierung dieser Anwendungsfälle kann die Softwarekomponente der Head Unit (HU_SVR) im Fahrzeugstatus (FZGS) auch die Ziele der Routenplanung einer in der Head Unit integrierten Navigation übertragen oder über ein Applikationsinterface auf die Zieldaten der aktiven Navigationsapplikation im tragbaren Endgerät (PD) zugreifen.

Zur Realisierung dieser Funktionalität kann die Softwarekomponente (PD_CLT) des tragbaren Endgerätes eine weitere Regelbasis (APRULS) aufweisen, die bestimmt, welche der gestarteten Applikationen (Ai) in den Vordergrund geholt, das heißt bedienbar und sichtbar ist, oder dem Benutzer zur Auswahl angezeigt werden. In der Regelbasis (APRULS) können Ereignisse in Abhängigkeit vom Fahrzeugstatus (FZGS) formuliert werden, wann eine gestartete Applikation (Ai) sichtbar bzw. bedienbar gemacht werden soll. Optional kann der Benutzer die Applikationsregelbasis (APRULS) selbst durch ein Benutzerinterface der Softwarekomponente des tragbaren Endgeräts (PD_CLT) bestimmen, so dass nur Ereignisse zugelassen werden, die nicht im Widerspruch zu den Freigaben für die Anzeige oder Bedienbarkeit der Applikation stehen.

Beispielsweise kann die Regelbasis (APRULS) die folgenden Regeln aufweisen:
1: Fahrzeuggeschwindigkeit v = 0: MediaplayerApp
2: Fahrzeuggeschwindigkeit v > 10 km/h: NavApp
3: Tankinhalt Q < 5 l: TankApp
4: Verkehrsdichte > 50 %: StauApp

Wenn das Fahrzeug steht, wird die Regel 1 aktiviert, so dass die MediaplayerApp in den Vordergrund kommt und ein Video bei stehendem Fahrzeug abgespielt wird. Wenn das Fahrzeug eine Geschwindigkeit von 10 km/h überschreitet, wird Regel 2 aktiviert und die NavApp mit einer Kartendarstellung der Umgebung kommt in den Vordergrund. Wenn der Tankinhalt das oben definierte Limit unterschreitet, wird Regel 3 aktiviert und die TankApp kommt in den Vordergrund, die eine Liste der nahen Tankstellen darstellt. Bei dichtem Verkehr wird Regel 4 aktiviert und die StauApp kommt in den Vordergrund, welche eine Liste der aktuellen Staus mit weiteren Hinweisen darstellt.

Gemäß einer weiteren beispielhaften Ausführungsform der Erfindung ist die Rechnereinrichtung ein tragbares Endgerät, wobei die Rechnereinrichtung einen Bildschirm aufweist. Ferner definieren die Multimediadaten ein auf dem Bildschirm der Rechnereinrichtung dargestelltes Bild, welches auf einem Bildschirm der Ausgabeeinrichtung der Fahrzeugmultimediaeinrichtung wiederzugeben ist.

Mit anderen Worten ist das durch die Multimediadaten definierte Bild gleichzeitig auf einem Bildschirm des tragbaren Endgerätes und auf einem Bildschirm der Fahrzeugmultimediaeinrichtung wiederzugeben.

Ein weiterer Aspekt der Erfindung betrifft ein Fahrzeug mit einer im Kontext der Erfindung beschriebenen Fahrzeugmultimediaeinrichtung oder mit einem im Kontext der Erfindung beschriebenen Fahrzeugmultimediasystem.

Bei dem Fahrzeug kann es sich beispielsweise um ein Kraftfahrzeug, ein Auto, Personenkraftwagen, Lastkraftwagen oder Bus, oder um ein Nutzfahrzeug handeln.

Ein weiterer Aspekt der Erfindung betrifft ein Verfahren zum Übertragen von mittels einer Ausgabeeinrichtung einer Fahrzeugmultimediaeinrichtung auszugebenden Multimediadaten von einer Rechnereinrichtung zu der mit der Rechnereinrichtung gekoppelten Fahrzeugmultimediaeinrichtung. Das Verfahren weist die Schritte des Empfangens einer Fahrzeugstatusinformation von der Fahrzeugmultimediaeinrichtung durch die Rechnereinrichtung sowie des Sendens von auszugebenden Multimediadaten an die Fahrzeugmultimediaeinrichtung auf. Ferner weist das Verfahren den Schritt des Sendens von Freigabedaten, die festlegen, in welchem Umfang die auszugebenden Multimediadaten auszugeben sind, an die Fahrzeugmultimediaeinrichtung auf.

Dieses Verfahren kann beispielsweise von einem Prozessor eines tragbaren Endgerätes durchgeführt werden. Ferner kann das Verfahren auch Schritte aufweisen, die im Zusammenhang mit der im Kontext der vorliegenden Erfindung beschriebenen Rechnereinrichtung beschrieben sind. Außerdem können die im Verfahren definierten Schritte in der angegebenen Reihenfolge, in einer anderen Reihenfolge oder parallel zueinander durchgeführt werden.

Ein weiterer Aspekt der Erfindung betrifft ein Programmelement, das, wenn es auf einem Prozessor einer Rechnereinrichtung ausgeführt wird, den Prozessor anleitet, das im Kontext der Erfindung beschriebene Verfahren durchzuführen.

Das Programmelement kann dabei auch ein Programmupdate sein, welches ein bereits bestehendes Programmelement dazu befähigt, die definierten Schritte durchzuführen.

Ein weiterer Aspekt der Erfindung betrifft ein computerlesbares Medium, auf dem ein Programmelement gespeichert ist, das, wenn es auf einem Prozessor einer Rechnereinrichtung ausgeführt wird, den Prozessor anleitet, das im Kontext der Erfindung beschriebene Verfahren durchzuführen.

Das computerlesbare Medium kann beispielsweise ein Datenträger, wie eine CD, ein USB-Stick oder eine Festplatte, sein. Ferner kann das computerlesbare Medium auch eine in einem tragbaren Endgerät bzw. in einer Rechnereinheit eingebaute Speichereinheit bezeichnen, auf der das Programmelement gespeichert ist.

Ein weiterer Aspekt der Erfindung betrifft ein tragbares Endgerät mit einem im Kontext der Erfindung beschriebenen computerlesbaren Medium.

Das tragbare Endgerät kann beispielsweise ein Smartphone, ein Tablet oder ein tragbarer Computer bzw. Notebook sein. Das computerlesbare Medium kann zum Beispiel eine im tragbaren Endgerät integrierte Speichereinheit sein.

Eine beispielhafte Ausführungsform der Erfindung betrifft ein tragbares Endgerät, welches den im Kontext der Erfindung beschriebenen Regelsatz aufweist. Das tragbare Endgerät ist dazu ausgeführt, über eine Verbindung zu einem Autorisierungsdienst, den Regelsatz zu ändern oder zu erweitern. Die Verbindung zu dem Autorisierungsdienst kann geschützt sein, z. B. eine authentifizierte, autorisierte und/oder verschlüsselte Datenverbindung aufweisen.

Weitere Merkmale, Vorteile und Anwendungsmöglichkeiten der Erfindung ergeben sich aus der nachfolgenden Beschreibung der Ausführungsbeispiele und Figuren.
- Fig. 1: zeigt ein Fahrzeugmultimediasystem gemäß einem Ausführungsbeispiel der Erfindung.
- Fig. 2: zeigt ein Fahrzeug mit einem Fahrzeugmultimediasystem gemäß einem Ausführungsbeispiel der Erfindung.
- Fig. 3: zeigt ein Flussdiagramm für ein Verfahren gemäß einem Ausführungsbeispiel der Erfindung.
Die Figuren sind dabei schematisch und nicht maßstabsgetreu dargestellt. Sind in der nachfolgenden Beschreibung in verschiedenen Figuren die gleichen Bezugszeichen angegeben, so bezeichnen diese gleiche oder ähnliche Elemente. Gleiche oder ähnliche Elemente können aber auch mit unterschiedlichen Bezugszeichen bezeichnet sein.

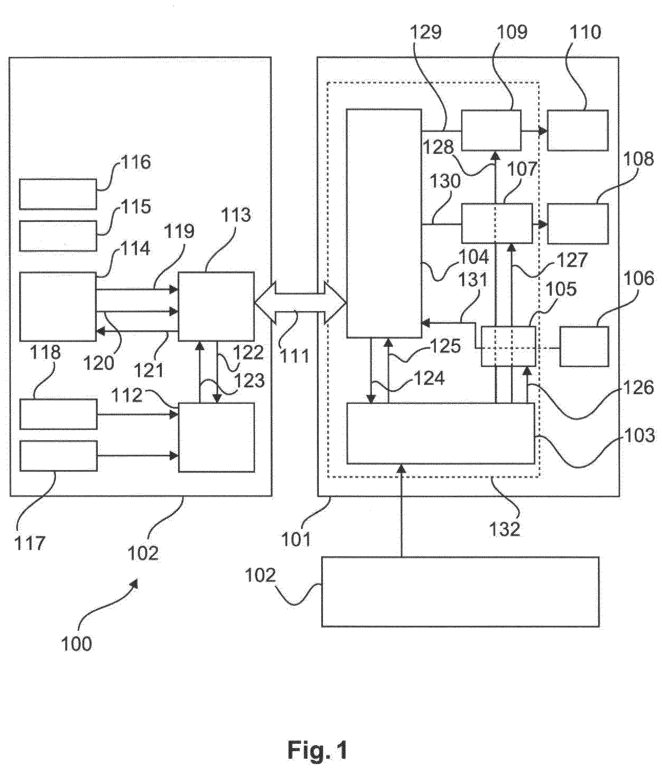

In Fig. 1 ist ein Fahrzeugmultimediasystem 100 gemäß einem Ausführungsbeispiel der Erfindung dargestellt, welches eine Head Unit (HU) 101 einer Fahrzeugmultimediaeinrichtung sowie ein tragbares Endgerät (PD) 102 aufweist, das an die Head Unit (HU) 101 gekoppelt ist. Das tragbare Endgerät 102 entspricht dabei der im Kontext der Erfindung beschriebenen Rechnereinheit.
Die Head Unit 101 weist eine Softwarekomponente (HU_SVR) 103 auf, die unter anderem auf die Fahrzeugsensorik 102 zugreifen kann und beispielsweise die Außentemperatur, den Tankinhalt, Geschwindigkeit oder andere Parameter ermitteln kann. Ferner ist die Softwarekomponente (HU_SVR) 103 dazu ausgeführt, Videodaten 128 an eine Bildschirmkontrolleinheit (DISP CTRL) 109 zu übertragen, welche die Videodaten wiederum an den Bildschirm 110 übertragen kann. Die Softwarekomponente 103 ist außerdem dazu ausgeführt, Audiodaten 127 an eine Audiokontrolleinheit (AUDIO CTRL) 107 zu übertragen, welche die Audiodaten an eine Audioausgabe 108 übertragen kann. Außerdem ist die Softwarekomponente 103 auch dazu ausgeführt, Benutzerschnittstellendaten 126 an eine Benutzerschnittstellenkontrolleinheit (USER CRTL) zu übertragen, welche die Benutzerschnittstellendaten an eine Benutzerschnittstelle 106 überträgt. Beispielsweise können die Benutzerschnittstellendaten 126 festlegen, welche Eingaben der Benutzer mit der Benutzerschnittstelle 106 tätigen kann.

Ferner weist die Head Unit 101 eine Datenschnittstelle 104 (DEMUX, MUX, BUS, HU) auf, mit welcher die Head Unit 101 mit anderen an die Head Unit gekoppelten Geräten, zum Beispiel mit dem tragbaren Endgerät 102, kommunizieren kann. Beispielsweise kann die Softwarekomponente 103 eine Fahrzeugstatusinformation (FZGS) 125 an die Datenschnittstelle 104 übertragen. Ferner kann die Benutzerschnittstellenkontrolleinheit 105 eine an der Benutzerschnittstelle 106 getätigte Benutzereingabe 131 an die Datenschnittstelle 104 weiterleiten. Ferner kann die Videokontrolleinheit 109 auszugebende Videodaten 129 von der Datenschnittstelle 104 an den Bildschirm 110 weiterleiten. Ebenfalls kann die Audiokontrolleinheit 107 auszugebende Audiodaten 130 von der Datenschnittstelle 104 an die Audioausgabe 108 weiterleiten. Die Datenschnittstelle 104 kann ferner Freigabedaten (FMSG) 124 an die Softwarekomponente 103 weiterleiten. Die Komponenten 103, 104, 105, 107 und 108 sowie deren Verbindungen sind Teil der Steuereinrichtung 132 der Fahrzeugmultimediaeinrichtung.

Das tragbare Endgerät (PD) 102 weist eine Softwarekomponente (PD_CLT) 112 auf. Die Softwarekomponente 112 des tragbaren Endgerätes 102 kann auf die Freigabetabelle (FPRULS) 117 zugreifen, wobei die Freigabetabelle (FPRULS) dem im Kontext der Erfindung beschriebenen Regelsatz entspricht. Ferner kann die Softwarekomponente 112 auch auf eine weitere Regelbasis (APRULS) 118 zugreifen. Das tragbare Endgerät 102 weist ferner eine Datenschnittstelle 113 (MUX, DEMUX, BUS, PD) auf, mittels welcher das tragbare Endgerät mit der Datenschnittstelle 104 der Head Unit 101 gekoppelt ist. Ferner weist das tragbare Endgerät 102 inaktive Applikationen (App A2) 115 und (App A3) 116 auf. Außerdem weist das tragbare Endgerät 102 eine aktive Applikation (App AVU) 114 auf. Die aktive Applikation 114 überträgt der Datenschnittstelle 113 wiederzugebende Videodaten 119 sowie auszugebende Audiodaten 120, so dass diese an die Datenschnittstelle 104 der Head Unit 101 übertragen werden können und mittels des Bildschirms 110 und/oder der Audioausgabe 108 ausgegeben werden können. Ferner kann die Datenschnittstelle 113 des tragbaren Gerätes 102 von der Datenschnittstelle 104 der Head Unit 101 auch Benutzereingaben 131 empfangen und entsprechende Benutzereingaben 121 an die aktive Applikation 114 weiterleiten.

Die Verbindung 111 zwischen der Schnittstelle 113 des tragbaren Endgeräts 102 und der Schnittstelle 104 der Head Unit 101 kann beispielsweise über USB, Bluetooth oder WLAN erfolgen.

Das Wiedergeben von Audio- bzw. Videodaten mittels der Audioausgabe 108 bzw. des Bildschirms 110 der Head Unit 101 kann wie folgt erfolgen. Die Softwarekomponente 103 der Head Unit 101 empfängt von der Fahrzeugsensorik 102 Fahrzeugstatusinformationen. Diese Fahrzeugstatusinformationen 125 werden an die Datenschnittstelle 104 der Head Unit 101 und anschließend an die Datenschnittstelle 113 des tragbaren Endgeräts 102 übertragen. Die Datenschnittstelle 113 des tragbaren Endgeräts 102 überträgt die Fahrzeugstatusinformation 122 an die Softwarekomponente 112 des tragbaren Endgeräts 102. Basierend auf dieser Fahrzeugstatusinformation 122 kann die Softwarekomponente 112 Regeln für die Freigabe aus der Freigabetabelle 117 auslesen und Freigabedaten bzw. eine Freigabenachricht (FMSG) erzeugen und diese 123 an die Datenschnittstelle 113 des tragbaren Endgeräts 102 übertragen. Die Datenschnittstelle 113 überträgt die auszugebenden Videodaten und Audiodaten sowie die Freigabedaten mittels der Verbindung 111 zur Schnittstelle 104 der Head Unit 101. Anschließend werden die Freigabedaten 124 an die Softwarekomponente 103 der Head Unit 101 übertragen, welche Videodaten 128, Audiodaten 127 und/oder Benutzerschnittstellenkontrolldaten 126 an die Einheiten 109, 107 bzw. 105 überträgt. Die Bildschirmkontrolleinheit 109 gibt dann die Videodaten 128 mittels des Bildschirms 110 aus. Entsprechend gibt die Audiokontrolleinheit 107 die Audiodaten 127 mittels der Audioausgabe aus. Die Benutzerschnittstellenkontrolleinheit 105 legt basierend auf den Benutzerschnittstellenkontrolldaten 126 die Eingabemöglichkeiten mittels der Benutzerschnittstelle 106 fest.

Zum Beispiel kann der folgende Beispielfall auftreten, bei welchem ein Autofahrer in sein parkendes Auto einsteigt und sein Smartphone beispielsweise mittels MHL an die Head Unit 101 koppelt und die Smartphone-Software startet. Diese Software baut nun mittels Bluetooth, WLAN oder über den MHL-Datenkanal eine Verbindung zur Head Unit 101 auf und erfragt den Fahrzeugstatus 102. Da das Fahrzeug parkt, ist die Smartphone-Nutzung über die Ein- Ausgabeeinheiten der Head Unit nicht eingeschränkt. Das Smartphone schickt zyklisch das Freischaltsignal für die unbeschränkte Displaydarstellung an die Head Unit, die daraufhin das per MHL empfangene Videobild auf dem Display in der Mittelkonsole anzeigt.

Der Autofahrer entscheidet sich, einen Videofilm auf dem Smartphone 102 abzuspielen und startet daher die Mediaplayer App. Die Wiedergabe erfolgt über das Display 110 und die Lautsprecher 108 des Fahrzeuges. Zusätzlich startet er Applikationen, die ihn bei der Fahrt unterstützen sollen: Navigation (NavApp), Tankassistent (TankApp) und eine Telematikanwendung zur Stauumfahrung (StauApp). Der Fahrer wählt wieder die Mediaplayer App, um das Video zu schauen. Nun startet der Autofahrer den Motor und fährt los. Der geänderte Fahrzeugstatus mit einer Fahrgeschwindigkeit größer als die Grenzgeschwindigkeit wird dem Smartphone 102 von der Head Unit 101 mitgeteilt. Die Softwarekomponente 112 auf dem Smartphone 102 stellt fest, dass die Wiedergabe eines Videos in der neuen Situation nicht mehr erlaubt ist und schickt kein Freischaltsignal mehr an die Head Unit 101. Diese deaktiviert die Videoausgabe auf dem Fahrzeugdisplay 110, um eine Fahrerablenkung zu vermeiden. Das Fahrzeug fährt schneller als eine Grenzgeschwindigkeit, zum Beispiel 10 km/h, und die Information von der Head Unit Softwarekomponente 103 (HU_SVR) wird an die Softwarekomponente 112 des tragbaren Endgeräts (PD_CLT) geschickt. Gemäß der Regel in der Regelbasis (APRULS) 118 wird die Navigations-App von der Softwarekomponente (PD_CLT) 112 in den Vordergrund geholt und auf der Head Unit angezeigt.

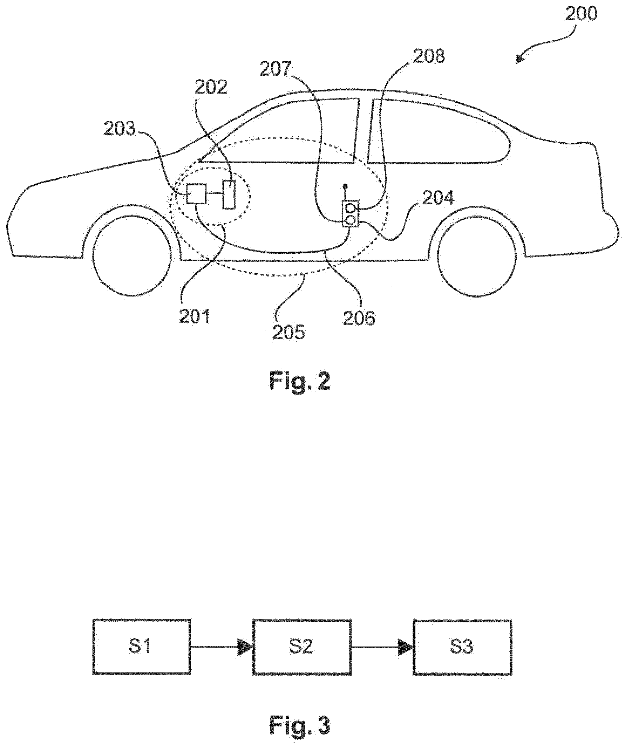

In Fig. 2 ist ein Fahrzeug 200 mit einem im Kontext der Erfindung beschriebenen Fahrzeugmultimediasystem 205 gemäß einem Ausführungsbeispiel der Erfindung dargestellt. Das Fahrzeugmultimediasystem 205 weist dabei eine Fahrzeugmultimediaeinrichtung 201 und eine Rechnereinheit 204 auf. Die Fahrzeugmultimediaeinrichtung umfasst ferner eine Ausgabeeinrichtung 202 und eine Steuereinrichtung 203. Die Rechnereinrichtung ist mittels einer Datenverbindung 206 an die Fahrzeugmultimediaeinrichtung bzw. an die Steuereinrichtung 203 gekoppelt. Ferner weist die Rechnereinheit 204 einen Bildschirm 208 und eine Speichereinheit 207 auf, in der die im Kontext der Erfindung beschriebenen Regelsätze gespeichert sind.

In Fig. 3 ist ein Flussdiagramm für ein Verfahren zum Übertragen von mittels einer Ausgabeeinrichtung einer Fahrzeugmultimediaeinrichtung auszugebenden Multimediadaten von einer Rechnereinrichtung zu der mit der Rechnereinrichtung gekoppelten Fahrzeugmultimediaeinrichtung gemäß einem Ausführungsbeispiel der Erfindung dargestellt. Das Verfahren umfasst die Schritte S1 des Empfangens einer Fahrzeugstatusinformation von der Fahrzeugmultimediaeinrichtung durch die Rechnereinrichtung und S2 des Sendens von auszugebenden Multimediadaten an die Fahrzeugmultimediaeinrichtung. Ferner umfasst das Verfahren den Schritt S3 des Sendens von Freigabedaten, die festlegen, in welchem Umfang die auszugebenden Multimediadaten auszugeben sind, an die Fahrzeugmultimediaeinrichtung.

Ergänzend sei darauf hinzuweisen, dass "umfassend" oder "aufweisend" keine anderen Elemente ausschließt und "ein" oder "einer" keine Vielzahl ausschließt. Ferner sei darauf hingewiesen, dass Merkmale, die mit Verweis auf eines der obigen Ausführungsbeispiele oder Ausführungsformen beschrieben worden sind, auch in Kombination mit anderen Merkmalen anderer oben beschriebener Ausführungsbeispiele oder Ausführungsformen verwendet werden können. Bezugszeichen in den Ansprüchen sind nicht als Einschränkungen anzusehen.

## Patentansprüche

1. Fahrzeugmultimediaeinrichtung (201), aufweisend:
eine Ausgabeeinrichtung (202) zum Ausgeben von Multimediadaten;
eine Steuereinrichtung (203) zum Steuern der Ausgabeeinrichtung;
wobei die Steuereinrichtung dazu ausgeführt ist, eine Fahrzeugstatusinformation zu bestimmen; und
wobei die Steuereinrichtung dazu ausgeführt ist, die Fahrzeugstatusinformation an eine an das Fahrzeugmultimediaeinrichtung gekoppelte Rechnereinrichtung (204) zu senden;
diese Einrichtung ist dadurch gekennzeichenet, dass die Steuereinrichtung dazu ausgeführt ist, von der Rechnereinrichtung auszugebende Multimediadaten und Freigabedaten, die festlegen, in welchem Umfang die auszugebenden Multimediadaten auszugeben sind, zu empfangen; und
dass die Steuereinrichtung dazu ausgeführt ist, die auszugebenden Multimediadaten maximal in dem von den Freigabedaten festgelegten Umfang mittels der Ausgabeeinrichtung auszugeben.

2. Fahrzeugmultimediaeinrichtung (201) nach Anspruch 1,
wobei die Ausgabeeinrichtung ein Bildschirm ist und
wobei die von der an die Fahrzeugmultimediaeinrichtung gekoppelten Rechnereinrichtung gesendeten Multimediadaten ein auf dem Bildschirm wiederzugebendes Bild definieren.

3. Fahrzeugmultimediaeinrichtung (201) nach Anspruch 1 oder 2,
wobei die Steuereinrichtung (203) dazu ausgeführt ist, nach Empfang der Freigabedaten die auszugebenden Multimediadaten maximal in dem von den Freigabedaten festgelegten Umfang mittels der Ausgabeeinrichtung für einen vordefinierten Zeitraum auszugeben; und
wobei die Steuereinrichtung (203) dazu ausgeführt ist, die auszugebenden Multimediadaten nach Ablauf des vordefinierten Zeitraums nicht mehr auszugeben, wenn zwischen dem Empfangen der Freigabedaten und dem Ablauf des vordefinierten Zeitraums keine neuen Freigabedaten empfangen wurden.

4. Fahrzeugmultimediaeinrichtung (201) nach einem der vorangehenden Ansprüche,
wobei die Steuereinrichtung (203) dazu ausgeführt ist, verschlüsselte und/oder signierte Freigabedaten von der gekoppelten Rechnereinrichtung zu empfangen;
wobei die Steuereinrichtung (203) dazu ausgeführt ist, die Freigebedaten zu entschlüsseln bzw. eine Signatur der Freigabedaten zu prüfen; und
wobei die Steuereinrichtung (203) dazu ausgeführt ist, die Multimediadaten nur dann auszugeben, wenn die Freigabedaten erfolgreich entschlüsselt wurden bzw. wenn deren Signatur erfolgreich geprüft wurde.

5. Fahrzeugmultimediaeinrichtung (201) nach einem der vorangehenden Ansprüche, wobei die Fahrzeugstatusinformation ausgewählt ist aus der Gruppe bestehend aus einer Geschwindigkeit des Fahrzeuges, einem Tankinhalt des Fahrzeuges, einer momentanen Verkehrsdichte in der Fahrzeugumgebung, Informationen zu Lichtverhältnissen, einer Komplexität eines vorausliegenden Fahrzeugpfades, einer Anzahl von Abbiegungen in einem vorausliegenden Fahrzeugpfad, vom Fahrzeug zu berücksichtigende Verkehrsregeln und jede Kombination hiervon.

6. Fahrzeugmultimediasystem (205), aufweisend:
eine Fahrzeugmultimediaeinrichtung (201) nach einem der vorangehenden Ansprüche;
eine Rechnereinrichtung (204);
wobei die Fahrzeugmultimediaeinrichtung (201) und die Rechnereinrichtung (204) miteinander koppelbar sind;
wobei die Rechnereinrichtung (204) dazu ausgeführt ist, die Fahrzeugstatusinformation der Fahrzeugmultimediaeinrichtung zu empfangen;
wobei die Rechnereinrichtung (204) dazu ausgeführt ist, die auszugebenden Multimediadaten zu erzeugen;
wobei die Rechnereinrichtung (204) dazu ausgeführt ist, basierend auf der Fahrzeugstatusinformation die Freigabedaten zu erzeugen; und
wobei die Rechnereinrichtung (204) dazu ausgeführt ist, die auszugebenden Multimediadaten und die Fahrzeugstatusinformation an die Fahrzeugmultimediaeinrichtung zu übertragen.

7. Fahrzeugmultimediasystem (205) nach Anspruch 6,
wobei die Rechnereinrichtung (204) eine Speichereinheit (207) aufweist; und
wobei in der Speichereinheit (207) ein Regelsatz gespeichert ist, in welchem für unterschiedliche Fahrzeugstatusinformationen und für unterschiedliche Arten von Multimediadaten definiert ist, in welchem Umfang die unterschiedlichen Arten von Multimediadaten jeweils in Abhängigkeit von einer Fahrzeugstatusinformation auszugeben sind.

8. Fahrzeugmultimediasystem nach Anspruch 6 oder 7,
wobei die Rechnereinrichtung (204) ein tragbares Gerät ist;
wobei die Rechnereinrichtung (204) einen Bildschirm (208) aufweist; und
wobei die Multimediadaten ein auf dem Bildschirm der Rechnereinrichtung dargestelltes Bild definieren , welches einem Bildschirm der Ausgabeeinrichtung der Fahrzeugmultimediaeinrichtung wiederzugeben ist.

9. Fahrzeug (200) mit einer Fahrzeugmultimediaeinrichtung nach einem der Ansprüche 1 bis 5 oder mit einem Fahrzeugmultimediasystem nach einem der Ansprüche 6 bis 8.

10. Verfahren zum Übertragen von mittels einer Ausgabeeinrichtung einer Fahrzeugmultimediaeinrichtung auszugebenden Multimediadaten von einer Rechnereinrichtung zu der mit der Rechnereinrichtung gekoppelten Fahrzeugmultimediaeinrichtung, das Verfahren aufweisend die Schritte:
Empfangen einer Fahrzeugstatusinformation von der Fahrzeugmultimediaeinrichtung durch die Rechnereinrichtung (S1) ;
Senden von auszugebenden Multimediadaten an die Fahrzeugmultimediaeinrichtung (S2); und
Senden von Freigabedaten, die festlegen, in welchem Umfang die auszugebenden Multimediadaten auszugeben sind, an die Fahrzeugmultimediaeinrichtung (S3).

11. Programmelement, das, wenn es auf einem Prozessor einer Rechnereinrichtung ausgeführt wird, den Prozessor anleitet, das Verfahren nach Anspruch 10 durchzuführen.

12. Computerlesbares Medium, auf dem ein Programmelement gespeichert ist, das, wenn es auf einem Prozessor einer Rechnereinrichtung ausgeführt wird, den Prozessor anleitet, das Verfahren nach Anspruch 10 durchzuführen.

13. Tragbares Endgerät (204) mit einem computerlesbaren Medium nach Anspruch 12.

## Claims

1. Vehicle multimedia device (201), having:
an output device(202) for outputting multimedia data;
a control device (203) for controlling the output device;
wherein the control device is designed to determine a piece of vehicle status information; and
wherein the control device is designed to send the vehicle status information to a computer device (204) coupled to the vehicle multimedia device;
this device is **characterized in that** the control device is designed to receive from the computer device multimedia data that are to be output and clearance data that stipulate the scope in which the multimedia data that are to be output can be output; and
**in that** the control device is designed to output, by means of the output device, the multimedia data that are to be output at most in the scope stipulated by the clearance data.

2. Vehicle multimedia device (201) according to Claim 1,
wherein the output device is a screen and
wherein the multimedia data sent by the computer device coupled to the vehicle multimedia device define an image that is to be reproduced on the screen.

3. Vehicle multimedia device (201) according to Claim 1 or 2, wherein the control device (203) is designed to output, by means of the output device, for a predefined period after the clearance data are received, the multimedia data that are to be output at most in the scope stipulated by the clearance data; and
wherein the control device (203) is designed to no longer output the multimedia data that are to be output after the predefined period has elapsed if no new clearance data have been received between the clearance data being received and the predefined period elapsing.

4. Vehicle multimedia device (201) according to one of the preceding claims,
wherein the control device (203) is designed to receive encrypted and/or signed clearance data from the coupled computer device;
wherein the control device (203) is designed to decrypt the clearance data and to check a signature of the clearance data; and
wherein the control device (203) is designed to output the multimedia data only if the clearance data have been successfully decrypted and if the signature thereof has been successfully checked.

5. Vehicle multimedia device (201) according to one of the preceding claims, wherein the vehicle status information is selected from the group consisting of a speed of the vehicle, a tank content of the vehicle, a current traffic density in the vehicle surroundings, information pertaining to light conditions, a complexity of a vehicle path ahead, a number of turns in a vehicle path ahead, traffic rules to be taken into consideration by the vehicle and any combination of these.

6. Vehicle multimedia system (205), having:
a vehicle multimedia device (201) according to one of the preceding claims;
a computer device (204);
wherein the vehicle multimedia device (201) and the computer device (204) are couplable to one another;
wherein the computer device (204) is designed to receive the vehicle status information of the vehicle multimedia device;
wherein the computer device (204) is designed to produce the multimedia data that are to be output;
wherein the computer device (204) is designed to take the vehicle status information as a basis for producing the clearance data; and
wherein the computer device (204) is designed to transmit the multimedia data that are to be output and the vehicle status information to the vehicle multimedia device.

7. Vehicle multimedia system (205) according to Claim 6,
wherein the computer device (204) has a memory unit (207); and
wherein the memory unit (207) stores a set of rules in which, for different vehicle status information and for different types of multimedia data, there is a definition of the scope in which the different types of multimedia data can each be output on the basis of a piece of vehicle status information.

8. Vehicle multimedia system according to Claim 6 or 7,
wherein the computer device (204) is a portable device;
wherein the computer device (204) has a screen (208); and
wherein the multimedia data define an image that is presented on the screen of the computer device and that is to be reproduced on a screen of the output device of the vehicle multimedia device.

9. Vehicle (200) having a vehicle multimedia device according to one of Claims 1 to 5 or having a vehicle multimedia system according to one of Claims 6 to 8.

10. Method for transmitting multimedia data that are to be output by means of an output device of a vehicle multimedia device from a computer device to the vehicle multimedia device coupled to the computer device, the method comprising the steps of:
reception of a piece of vehicle status information from the vehicle multimedia device by the computer device (S1);
sending of multimedia data that are to be output, to the vehicle multimedia device (S2); and
sending of clearance data that stipulate the scope in which the multimedia data that are to be output can be output, to the vehicle multimedia device (S3).

11. Program element that, when executed on a processor of a computer device, instructs the processor to perform the method according to Claim 10.

12. Computer-readable medium that stores a program element that, when executed on a processor of a computer device, instructs the processor to perform the method according to Claim 10.

13. Portable terminal (204) having a computer-readable medium according to Claim 12.

## Revendications

1. Dispositif multimédia de véhicule (201) comprenant :
un dispositif de sortie (202) destiné à fournir en sortie des données multimédia ;
un dispositif de commande (203) destiné à commander le dispositif de sortie ;
dans lequel le dispositif de commande est conçu pour déterminer une information d'état de véhicule ; et
dans lequel le dispositif de commande est conçu pour envoyer l'information d'état de véhicule à un dispositif informatique (204) couplé au dispositif multimédia de véhicule ;
ledit dispositif étant **caractérisé en ce que**
le dispositif de commande est conçu pour recevoir des données multimédia devant être fournies en sortie par le dispositif informatique et des données de validation qui fixent dans quelle mesure les données multimédia à fournir en sortie doivent être fournies en sortie ; et
**en ce que** le dispositif de commande est conçu pour fournir en sortie les données multimédia devant être fournies en sortie par le dispositif de sortie au maximum dans l'étendue fixée par les données de validation.

2. Dispositif multimédia de véhicule (201) selon la revendication 1, dans lequel le dispositif de sortie est un écran et dans lequel les données multimédia envoyées par le dispositif informatique couplé au dispositif multimédia de véhicule définissent une image devant être reproduite sur l'écran.

3. Dispositif multimédia de véhicule (201) selon la revendication 1 ou 2,
dans lequel le dispositif de commande (203) est conçu, après réception des données de validation, pour fournir en sortie les données multimédia à fournir en sortie au maximum dans l'étendue définie par les données de validation au moyen du dispositif de sortie pendant une période de temps prédéfinie ; et
dans lequel le dispositif de commande (203) est conçu pour ne plus fournir en sortie les données multimédia à fournir en sortie après l'expiration de la période de temps prédéfinie si aucune nouvelle donnée de validation n'a été reçue entre la réception des données de validation et l'expiration de la période de temps prédéfinie.

4. Dispositif multimédia de véhicule (201) selon l'une des revendications précédentes,
dans lequel le dispositif de commande (203) est conçu pour recevoir des données de validation chiffrées et/ou signées en provenance du dispositif informatique couplé ;
dans lequel le dispositif de commande (203) est conçu pour déchiffrer les données de validation ou pour vérifier une signature des données de validation ; et
dans lequel le dispositif de commande (203) est conçu pour ne fournir en sortie les données multimédia que si les données de validation ont été déchiffrées avec succès ou si leur signature a été vérifiée avec succès.

5. Dispositif multimédia de véhicule (201) selon l'une des revendications précédentes, dans lequel l'information d'état de véhicule est sélectionnée dans le groupe constitué par une vitesse du véhicule, un contenu de réservoir du véhicule, une densité instantanée de la circulation au voisinage du véhicule, des informations concernant les conditions d'éclairage, une complexité d'un itinéraire précédent, un nombre de virages dans un itinéraire précédent, des règles de circulation que doit prendre en compte le véhicule et une combinaison quelconque de ceux-ci.

6. Système multimédia de véhicule (205) comportant :
un dispositif multimédia de véhicule (201) selon l'une des revendications précédentes ;
un dispositif informatique (204) ;
dans lequel le dispositif multimédia de véhicule (201) et le dispositif informatique (204) peuvent être couplés l'un à l'autre ;
dans lequel le dispositif informatique (204) est conçu pour recevoir l'information d'état de véhicule du dispositif multimédia de véhicule ;
dans lequel le dispositif informatique (204) est conçu pour générer les données multimédia à fournir en sortie ;
dans lequel le dispositif informatique (204) est conçu pour générer les données de validation sur la base de l'information d'état de véhicule ; et
dans lequel le dispositif informatique (204) est conçu pour transmettre les données multimédia à fournir en sortie et l'information d'état de véhicule au dispositif multimédia de véhicule.

7. Système multimédia de véhicule (205) selon la revendication 6,
dans lequel le dispositif informatique (204) comprend une unité de mémoire (207) ; et
dans lequel un ensemble de règles est stocké dans l'unité de mémoire (207), qui définit, pour différentes informations d'état de véhicule et pour différents types de données multimédia, dans quelle mesure les différents types de données multimédia doivent chacun être fournis en sortie en fonction d'une information d'état de véhicule.

8. Système multimédia de véhicule selon la revendication 6 ou 7, dans lequel le dispositif informatique (204) est un appareil portable ;
dans lequel le dispositif informatique (204) comporte un écran d'affichage (208) ; et
dans lequel les données multimédia définissent une image affichée sur l'écran d'ordinateur qui doit être affichée sur un écran du dispositif de sortie du dispositif multimédia de véhicule.

9. Véhicule (200) équipé d'un dispositif multimédia de véhicule selon l'une des revendications 1 à 5 ou d'un système multimédia de véhicule selon l'une des revendications 6 à 8.

10. Procédé de transmission de données multimédia devant être fournies en sortie au moyen d'un dispositif de sortie d'un dispositif multimédia de véhicule d'un dispositif informatique au dispositif multimédia de véhicule couplé au dispositif informatique, le procédé comprenant les étapes suivantes :
la réception par le dispositif informatique d'informations d'état de véhicule en provenance du dispositif multimédia de véhicule (S1) ;
l'envoi de données multimédia à fournir en sortie au dispositif multimédia de véhicule (S2) ; et
l'envoi au dispositif multimédia de véhicule de données de validation déterminant la mesure dans laquelle les données multimédia à fournir en sortie doivent être fournies en sortie (S3).

11. Élément de programme qui, lorsqu'il est exécuté sur un processeur d'un dispositif informatique, demande au processeur de mettre en oeuvre le procédé selon la revendication 10.

12. Support lisible par ordinateur sur lequel est stocké un élément de programme qui, lorsqu'il est exécuté sur un processeur d'un dispositif informatique, demande au processeur de mettre en oeuvre le procédé selon la revendication 10.

13. Terminal portable (204) comportant un support lisible par ordinateur selon la revendication 12.
